# EUROPEAN PATENT APPLICATION

(11) **EP 4 667 235 A1**
(43) Date of publication of application: **24.12.2025**
(21) Application number: 25183817.3
(22) Date of filing: 18.06.2025
(51) Int. Cl.: B60B 27/00, B60B 27/02, B60B 35/02

(54) **HUB**

(30) Priority: 18.06.2024 IT 202400013894
(71) Applicant: Natino, Filippo, 27052 Godiasco Salice Terme (PV) (IT)
(72) Inventor: Natino, Filippo, 27052 Godiasco Salice Terme (PV) (IT)
(74) Representative: Roncuzzi, Davide

(57) **Abstract**

Hub (1) for connecting a front wheel (W) of a vehicle to an axle (A) of a stub axle (S) rotatably through at least one rolling support unit (U); said hub (1) comprising an elongated body (10) extended along a second central axis (AX2) between a respective first annular end (12) and a respective second annular end (14), both concentric to said second axis (AX2); said first end (12) being provided with coupling means (120) for coupling of said wheel (W); said elongated body (10) having internally an axisymmetric cavity (16) concentric to said second axis (AX2) engageable longitudinally by said axle (A); said cavity (16) having, starting from the side of said second end (14), a second cylindrical section (160) coaxial to said second axis (AX2) that measures a fourth diameter (D4) for housing, in use, said support unit (U); the cavity (16) having on the side of the first end (12) a first section (164) delimited internally by an axisymmetric surface of a lower diameter to said fourth diameter (D4) to act as an axial abutment for the unit (U); an annular cover (2) being carried by the second end (14) provided with axial abutment means (166) concentric to the second axis (AX2) and engaging the second section (160) to act as an axial abutment of said unit (U) on the opposite side to the first section (164).

## Description

The present invention relates to a hub. In particular, the present invention relates to a hub for a front wheel of a vehicle. In more detail, the present invention relates to a hub arranged to connect a front wheel of a go-kart to an axle of a stub axle.

### DESCRIPTION OF THE PRIOR ART

In the field of go-karts, it is known that the front wheels are connected to the frame rotatably by means of a component called a stub axle, which is provided with a mechanical articulation element, normally a sleeve, arranged between a coupling lever for coupling to the steering unit and to an axle that, through a hub fitted onto it by means of bearings and spacer bushings, carries one of the front wheels. The stiffness of the hub and axle assembly of each stub axle influences the ability to efficiently exchange the forces between the frame and the track through the corresponding wheel. Therefore, an optimal bending stiffness value of the hub and axle assembly that allows adherence of the wheels to be balanced, and therefore the road grip on trajectories preferred by the driver and reactivity of the go-kart, corresponds with different track, temperature and humidity conditions, and also differences in driving style. It is clear that each driver requires different stiffness of the hub and axle assembly, the value of which must be adapted each time to the sensitivity of the driver and to the respective needs.

Naturally, the stiffness of the assembly is influenced by the stiffness of the respective components, meaning that stub axles with an axle having a greater transverse dimension, hubs of larger dimensions and made of intrinsically stiffer materials are stiffer; in particular, hubs made of aluminium are more flexible than hubs made of magnesium or titanium, a drawback of which is obviously the higher cost.

It can therefore be clearly understood that, in order to alter the stiffness of the axle-hub assembly, the alternatives are to replace the stub axle or the hub, although the cost factor of the material from which the hub is made heavily influences the purchasing decision, so there is a tendency to prefer hubs made of less costly materials and structured to ensure the required stiffness of the assembly. Considering that the hub is coupled to the axle of the stub axle by means of a pair of radial bearings between which two bushings are interposed for respective axial positioning and the proportionality relationship between the length of the hub and the respective stiffness, it is normally decided to approximate the optimal stiffness value of the assembly by choosing a hub with a specific length from a set of hubs of different length.

This is why, with the metal from which they are made being the same, hubs are available on the market that have different longitudinal extension and, in particular, the stiffest, currently defined as "long", measure 60-110 mm, whereas the most flexible, currently defined as "short", measure 30-40 mm.

On the other hand, it should be considered that use of hubs of different length impacts on the wheel track of the vehicle which, as known, measures the distance to the centre of the tread of the tyres corresponding with the front or rear part of the vehicle, and this also impacts on the vehicle set-up in different track conditions and weather conditions.

Based on what is described above, the problem of varying the stiffness of the assembly of the hub and the relative axle of a stub axle on a go-kart type vehicle is currently resolved in an unsatisfactory manner, since it requires an invasive intervention on replacement of the stub axles, or the providing of hubs made of extremely expensive materials, or a plurality of hubs of different lengths, in order to face different track conditions, weather conditions and/or driving style of the driver, thus producing considerable purchasing and/or management costs. Considering the situation described above, it would be desirable to have a hub that, in addition to limiting and possibly overcoming the drawbacks of the prior art as illustrated above, is structurally shaped in an optimal manner so as to have sufficient stiffness and be suited to the different track conditions, weather conditions and/or driving style of the driver, allowing the set of components it is necessary to have in the trackside workshop in order to satisfy the driver's requests, based on the driver's current needs, to be limited, minimising the purchasing costs and management of the spare parts of the vehicle.

### SUMMARY OF THE PRESENT INVENTION

The present invention relates to a hub. In particular, the present invention relates to a hub for a front wheel of a vehicle. In more detail, the present invention relates to a hub arranged to connect a front wheel of a go-kart to an axle of a stub axle.

The drawbacks indicated above are solved by the present invention in accordance with at least one of the claims that follow.

According to some embodiments of the present invention, a hub is implemented to connect a front wheel of a 4-wheel vehicle, preferably a go-kart, to a respective stub axle rotatably through at least one rolling support unit; said hub comprising an elongated body extended along a second central axis between a respective first annular end and respective second annular end, both concentric to said second axis; said first end being provided with coupling means for coupling of said wheel; said elongated body having internally an axisymmetric cavity concentric to said second axis engageable longitudinally by said axle; said cavity having, starting from the side of said second end, a second cylindrical section coaxial to said second axis that measures a fourth diameter for housing, in use, said support unit; said cavity having on the side of said first end a first section delimited internally by an axisymmetric surface of a lower diameter to said fourth diameter to act as an axial abutment for said unit; an annular cover is carried by said second end in a selectively loosenable way, has a circular service hole concentric to said second axis and is provided with axial abutment means, which are concentric to said second axis and engage said second section to act as an axial abutment of said unit on the opposite side to said second section. According to an embodiment as described above, said axial abutment hubs comprise a circular crown.

According to an embodiment as described above, said support unit comprises at least one roller bearing for coupling with said stub axle and at least one spacing member to determine uniquely an axial position of said first bearing between said cover and said first section.

According to an embodiment as described above, said first bearing is of the thrust bearing type.

According to an embodiment as described above, said first bearing is of the angular contact type with one or two crowns of spheres, or taper roller type, or aligned cylindrical roller type, or spherical roller type, or cylindrical roller type, or two-way cylindrical roller type.

According to an embodiment as described above, said support unit comprises at least a second bearing of the thrust bearing or radial type.

According to an embodiment as described above, said first bearing and said second bearing are of the angular contact type with one crown of spheres, in order to be mountable according to an "O-shaped" or "X-shaped" layout. According to an embodiment as described above, said support unit comprises a plurality of spacing members installable in succession or alternated with one of said first bearing and said second bearing to define, as desired, a distance between said first bearing and said second bearing, in order to alter, as desired, a stiffness of said axle. According to an embodiment as described above, said elongated body has externally a plurality of longitudinal stiffening ribs distributed uniformly around said second axis, is delimited externally by a surface and alternated with concave lightening portions.

According to an embodiment as described above, said ribs are identical and said coupling means for coupling to said wheel have, for each said rib, a coupling pin axial to said wheel carried at the head by part of said first end that extends longitudinally from the opposite side to said second end.

Any further embodiments of the present invention are defined by the claims.

### BRIEF DESCRIPTION OF THE FIGURES

Further characteristics and advantages of the hub according to the present invention will become apparent from the following description, stated with reference to the appended figures, which illustrate at least one example of a non-limiting embodiment. In detail:
- Figure 1 is a perspective schematic view of an assembly of a hub according to the present invention and a stub axle for a go-kart;
- Figure 2 is a schematic perspective view of Figure 1 from another viewpoint;
- Figure 3 is a longitudinal cross-sectional view according to line III-III of Figure 2;
- Figure 4 is a schematic perspective view of Figure 3 on a reduced scale and with parts removed for clarity; and
- Figure 5 is a rear view of Figure 1.

### DETAILED DESCRIPTION OF THE PRESENT INVENTION

Before describing in detail the preferred embodiments of the present invention or details thereof, it is considered useful to specify that the relative scope of protection is not limited to the particular embodiments described here below. The disclosure and description in this document are illustrative and explanatory of one or more currently preferred embodiments and variants, and it will be clear to people skilled in the art that various changes in the design, in the organisation, in the order of operation, in the structures of the equipment and position, in the method and use of mechanical equivalents could be made without being extraneous to the spirit of the invention. Furthermore, it must be understood that the purpose of the appended figures is to illustrate and clearly disclose currently preferred embodiments to one of the people skilled in the art, but that they are not drawings that illustrate how such embodiments should be performed in reality or actual representations of end products; on the contrary, these figures could comprise simplified conceptual views to facilitate understanding or to allow an easier and rapid explanation to be provided. Furthermore, the dimensions and the arrangement of the components could differ from the ones shown and still function in the spirit of the invention.

On the other hand, it will be clear that various directions, such as "upper", "lower", "left", "right", "front", "rear" and so on, are performed only with respect to the explanation, in combination with the drawings, and that the components could be oriented in a different way, for example during transport and production, and also during functioning. Since many different and separate embodiments could be made within the scope of the concepts taught here, and since there are multiple changes that could be made to the embodiments described here, it must be understood that the details provided below should be interpreted as illustrative and not limiting the spirit of the invention.

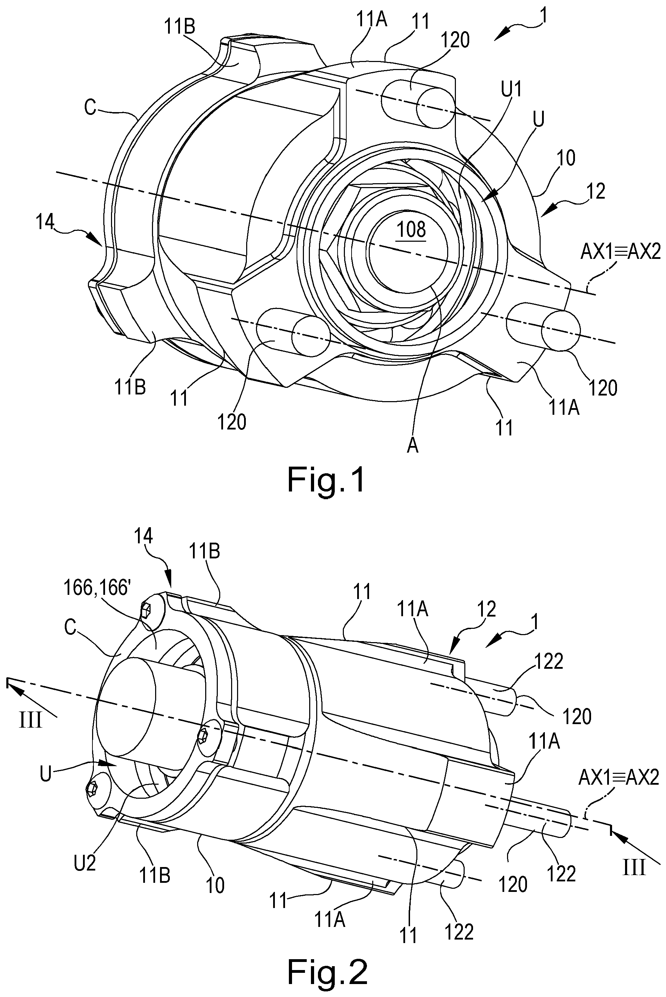

In Figure 1, the number 1 denotes, in its entirety, a hub 1 for rotatably connecting a front wheel W of a 4-wheel vehicle of known type, and not illustrated in the appended drawings to save on drawing, to an axle A of a respective stub axle S by means of at least one rolling support unit. It could be useful to specify that the vehicle to which implicit reference is made is a kart, or any other vehicle on which the front wheels are connected to the frame and to the steering system by means of a stub axle S such as that used on karts.

With reference to such hub 1, it is considered useful to specify that the technical teachings that follow refer to and develop the disclosure of Italian patent application no. 102024000013894 of the same applicant and that, therefore, these teachings are to be considered, for brevity, as incorporated herein by reference.

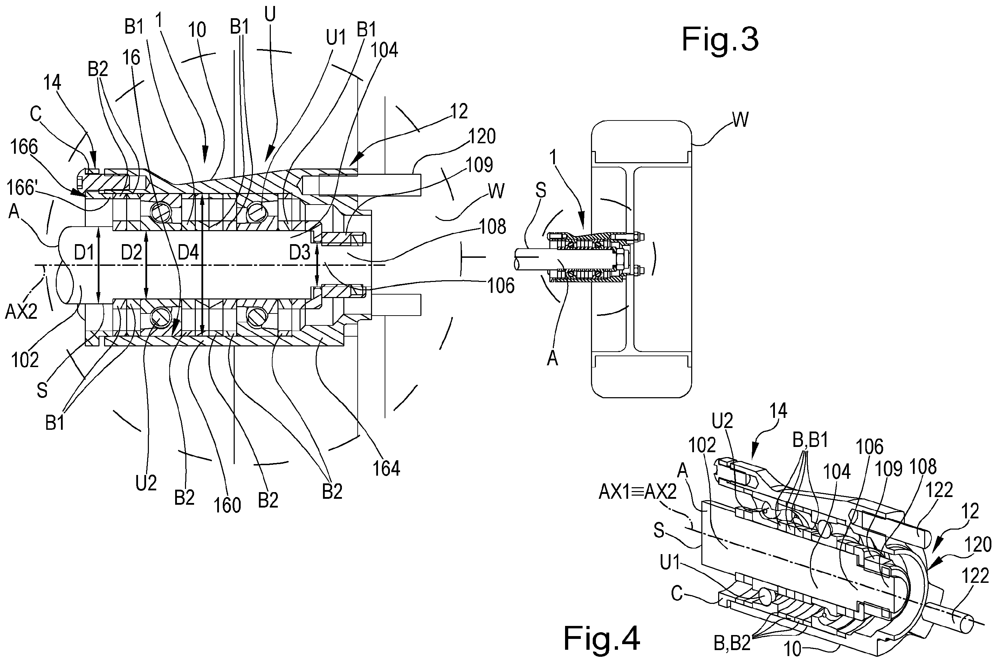

With particular reference to Figure 3, the axle A extends according to a first central axis AX1 and has a first cylindrical portion 102 concentric with the first axis AX1 arranged in series with a second cylindrical portion 104 concentric with the first axis AX1, in turn delimited longitudinally by a third cylindrical portion 106 on the opposite side to the first portion 102. The first portion 102, the second portion 104 and the third portion 106 are concentric to the first axis AX1 and measure respectively a first diameter D1, a second diameter D2 lower than the first diameter D1 and a third diameter D3 lower than the second diameter D2. Furthermore, the third portion 106 is delimited longitudinally by a threaded portion 108.

With particular reference to Figure 1, the hub 1 comprises an elongated body 10 that extends along a second central axis AX2 between a first annular end 12 and a second annular end 14, both concentric to the second axis AX2. The elongated body 10 has an axisymmetric shape and has externally a plurality of longitudinal stiffening ribs 11, identical and distributed uniformly around the second axis AX2, alternated with concave lightening portions that divide a front portion 11A and a rear portion 11B. Each rib 11 is delimited peripherally by a surface that has a concave portion on the centreline. In this manner, the elongated body 10 has a structure that is particularly slender but stiffened on bending by the ribs 11, and is therefore lightened but equally suited to resisting the bending stress and torsional stress exchanged between each axle of the stub axle and relative wheel and that, consequently, have repercussions on the frame, influencing the behaviour of the vehicle in conditions of use.

In the appended drawings, for the sake of practicality, there are three ribs 11, but neither the number nor the identicalness thereof are conditions that influence the broadness of scope of the present invention.

Once again with particular reference to Figure 3, the elongated body 10 comprises a coupling 120 for each rib 11, each of which has an axial coupling pin 122 for coupling to the wheel W that is carried at the head by said rib 11 part of the first end 12, and that extends longitudinally on the opposite side to the second end 14. With particular reference to the appended drawings, the elongated body 10 has internally an axisymmetric cavity 16 concentric to the second axis AX2 and engageable longitudinally by the axle A.

The cavity 16 has, starting from the side of the second annular end 14, a cylindrical section 160 that is defined here and below as second section 160 for the sake of practicality, is coaxial to the second axis AX2 and measures a fourth diameter D4 for housing, in use, the support unit U. Furthermore, the cavity 16 has, on the side of the first end 12, a section 164 that is defined here and below as first section 164 for the sake of practicality and is delimited internally by an axisymmetric surface with a lower diameter than the fourth diameter D4, in order to act as an axial abutment for the rolling support unit U.

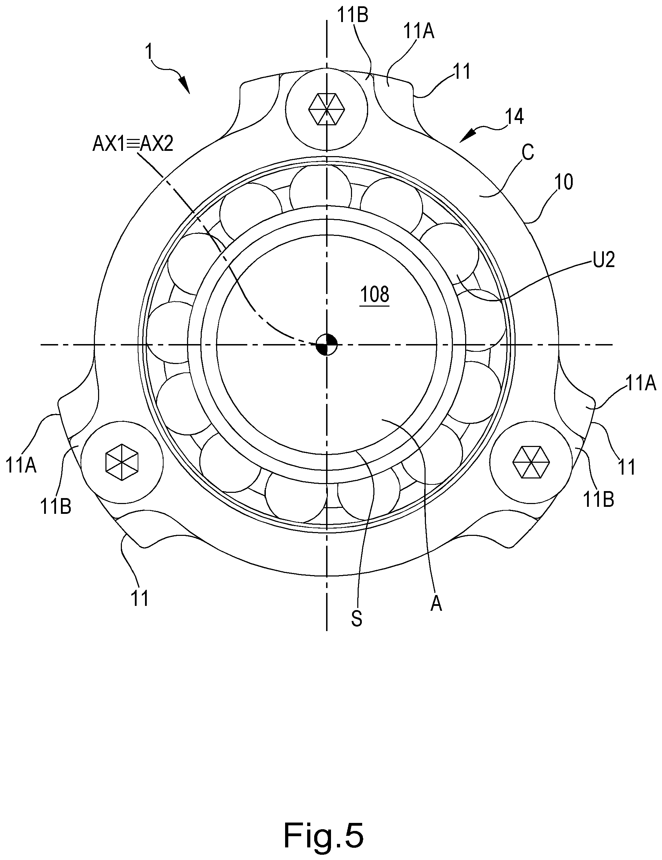

Furthermore, with particular reference to Figures 2, 3 and 5, the second end 14 of the hub 1 carries an annular cover 2 in a selectively loosenable way on the side of the second end 14, which has a circular service hole 20 concentric to the second axis AX2 and is provided with an axial abutment element 166 comprising a circular crown 166' that is concentric to the second axis AX2 and engages the second section 160 in order to act as an axial abutment of the rolling support unit U on the opposite side to the first section 164.

With particular reference to Figures 3 and 4, the support unit U comprises at least one roller bearing U1 for coupling with the axle A of the stub axle S and at least one spacing member B to determine uniquely an axial position of the bearing U1 between the cover C and the first section 164. In particular, the first bearing U1 is of the thrust bearing type, in order to absorb the axial stresses transmitted during use by the wheel W to the frame (known and not illustrated) of the vehicle through the stub axle S and vice versa. In particular, but without limiting the scope of the present invention, the first bearing is of the angular contact type with one crown of spheres or two crowns of spheres, based on the stresses to which it is presumed it must be subjected during use, and is carried on the side of the first end 12.

Once again with reference to Figure 3, the unit U comprises at least a second bearing U2 that can be of the thrust bearing type like the first bearing U1, or of the rigid radial ball bearing type, known type and not illustrated to save on drawing.

In particular, in Figures 3 and 4, the first bearing U1 and the second bearing U2 are of the angular contact type with one crown of spheres, mounted according to an "O-shaped" layout.

Furthermore, the at least one spacing member B of the support unit U is actuated by a plurality of internal spacing members B1 and external spacing members B2 installable in succession alternated with the first bearing U1 and the second bearing U2 or arranged alternated with the first bearing U1 and the second bearing U2 in order to distance, as desired, the first bearing U1 and the second bearing U2 so as to alter, as desired, a stiffness of the axle A.

The set of components of the support unit U comprising the internal spacers B1 for the internal rings of the first bearing U1 and of the second bearing U2 carried by the axle A is kept in pack against the shoulder between the first portion 102 and the second portion 104 by a lock nut 109, coupled to the threaded portion 108. The set of components of the support unit U comprising the external spacers B2 for the external rings of the first bearing U1 and of the second bearing U2 are carried by the hub 1 inside the cavity 16 between the edge portion of the crown 166' of the cover C and a shoulder 161 (visible in Figures 3 and 4) between the second section 160 and the first section 164.

Use of the hub 1 described above is easily understandable from what is described above and does not require further explanations.

However, it could be useful to specify that actuating the first bearing U1 and the second bearing U2 using angular contact thrust ball bearings mounted in an "O-shaped" layout, in addition to particularly stiffening the assembly between the axle A and the hub 1 by bending, it also absorbs both major axial stresses, greater than 35% of the maximum radial load, admissible for rigid radial ball bearings, in order to prevent the effects of collapse of the structure defined by the assembly of axle A and hub 1 carrying the wheel W consequent upon breaking up of the bearings, which would lead to loss of the wheel W, together with the hub 1.

Furthermore, the particular arrangement of the internal spacers B1 on the second portion 104 and the external spacers B2 inside the second section 160 allows the hub 1 to provide a specific stiffness to the axle A, and therefore allows the driver to have the preferred response of the frame (known and not illustrated) of the kart to the different driving situations on the track.

In conclusion, it is clear that changes and variants may be made to the hub 1 described and illustrated here without thus deviating from the scope of protection of the present invention.

In particular, it could be useful to specify that the choice of the type of the first bearing U1 and the second bearing U2 allows the bending stiffness of the assembly of axle A and hub 1 to be modulated, also by inverting the respective positions on the axle A. In this manner, the so-called "X-shaped" assembly of the first bearing U1 and the second bearing U2 is obtained, maintaining the ability of the angular contact thrust bearings to absorb the axial stresses transmitted to the frame by the wheels W as described above.

Furthermore, it could be useful to add that the hub 1 permits the use of bearings of different type, so that one of them is specific to support the axial load and the other to support the radial load acting on the axle A; in this case, any one of the first bearing U1 and the second bearing U2 can be of the taper roller type, or aligned cylindrical roller type, or spherical roller type, or cylindrical roller type, or two-way taper roller type, even if, in this case, it is opportune for the other bearing to be of the rigid radial ball bearing type or to have equivalent mechanical characteristics.

In the claims, any sign of reference between brackets should not be interpreted as a limitation of the claim. The expression "comprising" does not exclude the presence of other elements or steps in addition to those listed in a claim. Furthermore, the term "one", as used in this context, is defined as one or more than one. Furthermore, the use of introductory expressions such as "at least one" and "one or more" in the claims should not be interpreted in the sense that introduction of another claim element identified using the indefinite article "one" limits any claim in which said claim element appears singularly, even when said claim comprises the introductory phrases "one or more" or "at least one" and the indefinite article "one". The same applies for the use of definite articles. Unless otherwise established, terms such as "first" and "second" are used to arbitrarily distinguish the elements that such terms describe, to which an ordinal number is not necessarily attributed. Consequently, these terms are not necessarily intended to indicate the temporal or other type of priority of these elements. The simple fact that several measurements are stated in reciprocally different claims does not indicate that a combination of these measurements cannot be used to advantage.

## Claims

1. Hub (1) for connecting a front wheel (W) of a 4-wheel vehicle, preferably a go-kart, to an axle (A) of a respective stub axle (S) rotatably by means of at least one rolling support unit (U); said hub (1) comprising an elongated body (10) extended along a second central axis (AX2) between a respective first annular end (12) and a respective second annular end (14), both concentric to said second axis (AX2); said first end (12) being provided with coupling means (120) for coupling of said wheel (W); said elongated body (10) having internally an axisymmetric cavity (16) concentric to said second axis (AX2) engageable longitudinally by said axle (A); said cavity (16) having, starting from the side of said second end (14), a second cylindrical section (160) coaxial to said second axis (AX2) that measures a fourth diameter (D4) for housing, in use, said support unit (U); said cavity (16) having on the side of said first end (12) a first section (164) delimited internally by an axisymmetric surface of a lower diameter to said fourth diameter (D4) to act as an axial abutment for said unit (U); **characterised in that** it comprises an annular cover (2) that is carried by said second end (14) in a selectively loosenable way, has a circular service hole concentric to said second axis (AX2) and is provided with axial abutment means (166) concentric to said second axis (AX2) and engaging said second section (160) to act as an axial abutment of said unit (U) on the opposite side to said second section (164).

2. The hub according to claim 1, **characterised in that** said axial abutment means (166) comprise a circular crown (166').

3. The hub according to claim 1 or 2, **characterised in that** said support unit (U) comprises at least one roller bearing (U1) for coupling with said stub axle (S) and at least one spacing member (B) to determine uniquely an axial position of said first bearing (U1) between said cover (C) and said first section (164).

4. The hub according to claim 3, **characterised in that** said first bearing (U1) is of the thrust bearing type.

5. The hub according to claim 4, **characterised in that** said first bearing (U1) is of the angular contact type with one crown of spheres or two crowns of spheres, or taper roller type, or aligned cylindrical roller type, or spherical roller type, or cylindrical roller type, or two-way taper roller type.

6. The hub according to claim 4 or 5, **characterised in that** said support unit (U) comprises at least a second bearing (U2) of the thrust bearing type or radial type.

7. The hub according to claim 6, **characterised in that** said first bearing (U1) and said second bearing (U2) are of the angular contact type with one crown of spheres, in order to be mountable according to an "O-shaped" or "X-shaped" layout.

8. The hub according to any one of claims 3 to 6, **characterised in that** said support unit (U) comprises a plurality of spacing members (B1, B2) installable in succession or alternated with one of said first bearing (U1) and said second bearing (U2) to define, as desired, a distance between said first bearing (U1) and said second bearing (U2), in order to alter, as desired, a rigidity of said axle (A).

9. The hub according to any one of the preceding claims, **characterised in that** said elongated body (10) has externally a plurality of longitudinal stiffening ribs (11) distributed uniformly around said second axis (AX2), is delimited externally by a surface and alternated with concave lightening portions.

10. The hub according to claim 9, **characterised in that** said ribs (11) are identical and said coupling means (120) for coupling to said wheel (W) have, for each said rib (11), a coupling pin (122) axial to said wheel (W) carried at the head by the part of said first end (12) that extends longitudinally from the opposite side to said second end (14).
